# EUROPÄISCHE PATENTSCHRIFT

(11) **EP 4 490 416 B1**
(45) Veröffentlichungstag und Bekanntmachung des Hinweises auf die Patenterteilung: **11.02.2026**
(21) Anmeldenummer: 23705979.5
(22) Anmeldetag: 14.02.2023
(51) Int. Cl.: F16H 57/01, F16H 57/08

(54) **ANTRIEBSSYSTEM MIT PLANETENGETRIEBE**
DRIVE SYSTEM WITH PLANETARY GEARING
SYSTÈME D'ENTRAÎNEMENT À TRAIN PLANÉTAIRE

(30) Priorität: 07.03.2022 DE 102022000789
(43) Veröffentlichungstag der Anmeldung: 15.01.2025
(73) Patentinhaber: SEW-EURODRIVE GmbH & Co. KG, 76646 Bruchsal (DE)
(72) Erfinder: LUTZ, Markus, 68794 Oberhausen-Rheinhausen (DE); WÖPPERMANN, Markus, 76307 Karlsbad (DE); BLÖMEKE, Jens, 64560 Riedstadt (DE); LAMAJ, Ermalt, 68542 Heddesheim (DE)
(86) Internationale Anmeldenummer: PCT/EP2023/053678
(87) Internationale Veröffentlichungsnummer: WO 2023/169783

(56) Entgegenhaltungen:
- EP-A1- 3 081 831
- EP-A1- 3 081 831
- EP-A1- 3 081 831
- US-B2- 10 454 347
- US-B2- 10 454 347
- US-B2- 10 454 347

## Beschreibung

Die Erfindung betrifft ein Antriebssystem mit Planetengetriebe.

Es ist allgemein bekannt, dass ein Antriebssystem mit Planetengetriebe ausführbar ist.

Aus der DE 10 2017 115 479 A1 ist eine Temperaturbestimmung an einem Überlagerungsgetriebe bekannt.

Aus der DE 10 2017 102 108 A1 ist ein Getriebe mit Ausgangsdrehmomentsensor bekannt.

Aus der DE 103 12 941 A1 ist ein Bausatz für eine Baureihe von Getriebemotoren bekannt.

Aus der US 2008 / 0 279 686 A1 ist eine Windturbine bekannt, welche zumindest ein Getriebe umfasst.

Aus der US 2012 / 0 156 034 A1 ist ein Gerät zur Energiegewinnung aus einem Getriebe bekannt.

Aus der EP 3 081 831 A1 ist ein Planetengetriebe bekannt.

**Aus der** US 10 454 347 B2 **ist als nächstliegender Stand der Technik eine Drehmomentsensoranordnung bekannt.**

**Aus der** EP 3 081 831 A1 **ist ein Planetengetriebe bekannt.**

Der Erfindung liegt daher die Aufgabe zugrunde, ein Antriebssystem mit Planetengetriebe weiterzubilden, wobei die Betriebssicherheit verbessert sein soll

Erfindungsgemäß wird die Aufgabe bei dem Antriebssystem nach den in Anspruch 1 angegebenen Merkmalen gelöst.

Wichtige Merkmale der Erfindung bei dem Antriebssystem mit Planetengetriebe sind, dass das Planetengetriebe einen zweiwangigen Planetenträger aufweist,
wobei der Planetenträger eine erste Wange, eine zweite Wange und Stege aufweist,
wobei die Stege die erste Wange mit der zweiten Wange verbinden,
insbesondere wobei die Stege in Umfangsrichtung zur Drehachse des Planetenträgers, voneinander beabstandet sind, insbesondere gleichmäßig voneinander beabstandet sind,
wobei am Planetenträger ein Sensor zur Erfassung von Werten einer physikalischen Größe befestigt ist,
insbesondere wobei die physikalische Größe eine Längenänderung, eine Verformung, eine Verspannung oder eine Torsion des Planetenträgers, insbesondere eines der Stege des Planetenträgers, ist und/oder wobei der Sensor zumindest einen Dehnungsmessstreifen aufweist.

Von Vorteil ist dabei, dass die Betriebssicherheit erhöht ist, da das Planetengetriebe direkt vom Sensor überwachbar ist und somit ein Versagen direkt detektierbar. Denn der Planetenträger ist das abtriebsseitige Teil des Planetengetriebes und somit ist ein Versagen des Planetengetriebes einfach detektierbar.

**Erfindungsgemäß** weist die erste Wange, insbesondere auf ihrer von der zweiten Wange abgewandten Seite, eine Sacklochbohrung auf,
wobei, insbesondere stirnseitig und/oder an der von der zweiten Wange abgewandten Seite der ersten Wange, die erste Wange radial sich erstreckende Ausnehmungen aufweist, die in die Sacklochbohrung münden und sich bis zur radial äußeren Oberfläche der ersten Wange erstrecken. Von Vorteil ist dabei, dass eine einfache Bereitstellung eines Aufnahmevolumens für das Sendemodul und die Leiterplatte mit Signalelektronik bereit stellbar ist. Außerdem wird Material einsparbar und somit das Trägheitsmoment verringert, insbesondere zur Ermöglichung einer höheren Dynamik des Antriebssystems.

Bei einer vorteilhaften Ausgestaltung ist der Planetenträger einstückig, insbesondere einteilig, aus der ersten Wange, der zweiten Wange und den Stegen gebildet,
insbesondere wobei die Stege in axialer Richtung, insbesondere also parallel zur Richtung der Drehachse des Planetenträgers, zwischen der ersten Wange und der zweiten Wange angeordnet sind,
insbesondere wobei die Stege in Umfangsrichtung voneinander beabstandet sind.
insbesondere wobei der Planetenträger aus Metall gefertigt ist. Von Vorteil ist dabei, dass eine einfache Herstellung ermöglicht ist.

Bei einer vorteilhaften Ausgestaltung ist die Bohrungsachse der Sacklochbohrung parallel zur axialen Richtung, insbesondere parallel zur Drehachse des Planetenträgers, ausgerichtet. Von Vorteil ist dabei, dass der Planetenträger ausgewuchtet bleibt, insbesondere trotz Einbau eines Sendemoduls.

Bei einer vorteilhaften Ausgestaltung ist die Sacklochbohrung koaxial zum Planetenträger und/oder zum Sonnenrad des Planetengetriebes ausgerichtet. Von Vorteil ist dabei, dass der Planetenträger ausgewuchtet ist und somit mit hoher Drehzahl betreibbar ist, insbesondere trotz Einbau eines Sendemoduls.

Bei einer vorteilhaften Ausgestaltung weist der Planetenträger eine durch die erste Wange durchgehende Axialbohrung auf, die koaxial zur Sacklochbohrung ausgerichtet ist,
wobei der lichte Innendurchmesser der Axialbohrung kleiner ist, insbesondere mindestens zehnmal kleiner ist, als der lichte Innendurchmesser der Sacklochbohrung. Von Vorteil ist dabei, dass von den Stegen ein Kabel durch die Axialbohrung durchführbar ist und somit zur Leiterplatte mit Sendemodul. Insbesondere ist dies mittig im Planetenträger ermöglicht und somit bleibt der Planetenträger möglichst gut ausgewuchtet.

Bei einer vorteilhaften Ausgestaltung ist der Sensor an einem der Stege befestigt, insbesondere angeklebt ist,
insbesondere wobei der Sensor an einem ebenen Oberflächenabschnitt des Stegs angeordnet ist oder wobei der Sensor an der radial äußeren Oberfläche des Stegs angeordnet ist, insbesondere welche ein Abschnitt einer Mantelfläche eines Kreiszylinders gleicht. Von Vorteil ist dabei, dass das durch die Stege durchgeleitete Drehmoment einfach detektierbar ist, insbesondere mittels der Verformungen, denen der Steg und somit auch dessen Oberfläche ausgesetzt ist. Zwar ist ein sehr gutes Signal-Rausch-Verhältnis erreichbar, wenn der Sensor möglichst weit radial außen angeordnet ist; jedoch ist die radial äußere Oberfläche gekrümmt, so dass der Sensor, insbesondere ein Dehnungsmessstreifen, nur erschwert anbringbar ist. Die inneren Seiten der Stege jedoch weisen ebene Flächen auf, auf denen ein Sensor einfach anbringbar ist.

Bei einer vorteilhaften Ausgestaltung ist in der Sacklochbohrung, insbesondere am Boden der Sacklochbohrung, eine Leiterplatte angeordnet,
wobei eine elektrische Leitung von der Leiterplatte durch die Axialbohrung zum Sensor geführt ist. Von Vorteil ist dabei, dass die Auswertung der Sensorsignale einfach und nahe am Sensor ausführbar ist.

Bei einer vorteilhaften Ausgestaltung ist in der Sacklochbohrung ein Sendemodul angeordnet, das derart geeignet ausgeführt ist, dass das Sendemodul elektromagnetische Wellen, insbesondere Funkwellen, aussendet und/oder dass das Sendemodul die vom Sensor erfassten Werte mittels elektromagnetischer Wellen, insbesondere Funkwellen, insbesondere nach dem Bluetooth-Standard oder WLAN-Standard, aussendet. Von Vorteil ist dabei, dass die Sensorsignale oder die aus den ausgewerteten Sensorsignale erhaltenen Informationen berührungslos übertragbar sind an eine stationär angeordnete Auswerteeinheit.

Bei einer vorteilhaften Ausgestaltung sind die Ausnehmungen als Nuten, insbesondere Radialnuten, ausgeführt. Von Vorteil ist dabei, dass eine einfache Herstellung ermöglicht ist und das Sensormodul zwar von Metall umgeben beinahe in einem Faraday-Käfig angeordnet ist; jedoch ermöglichen die Ausnehmungen ein Austreten der elektromagnetischen Strahlung und somit eine Kommunikation zwischen der auf dem drehenden Teil, also Planetenträger, angeordneten Signalelektronik und der stationär insbesondere außerhalb des Gehäuseteils angeordneten Auswerteeinheit.

Bei einer vorteilhaften Ausgestaltung ist der Querschnitt der Ausnehmungen konstant, also unabhängig vom Radialabstand zur Drehachse des Planetenträgers ist. Von Vorteil ist dabei, dass eine einfache Herstellung ermöglicht ist, da der Planetenträger aus Metall, insbesondere aus Stahl, gefertigt ist.

Bei einer alternativen vorteilhaften Ausgestaltung weist der Querschnitt der Ausnehmungen mit zunehmendem Radialabstand zur Drehachse des Planetenträgers proportional zu diesem Radialabstand zunimmt. Von Vorteil ist dabei, dass die Masse des Planetenträgers und somit auch sein Trägheitsmoment möglichst gering ist.

Bei einer vorteilhaften Ausgestaltung ist an der Innenseite des Gehäuseteils oder des Hohlrads des Planetengetriebes eine Antenne angeordnet ist, insbesondere zum Empfang der vom Sendemodul abgestrahlten elektromagnetischen Wellen,
insbesondere wobei die Antenne mit einer Auswerteeinheit mittels einer Anschlussleitung verbunden ist, insbesondere welche durch eine durch das Gehäuseteil durchgehende Bohrung durchgeführt ist. Von Vorteil ist dabei, dass eine platzsparende Position für die Antenne vorhanden ist. Vorzugsweise wird die Antenne in einem starren Kunststoffteil angeordnet und/oder vergossen. Somit ist eine sichere Montage ausführbar.

Bei einer vorteilhaften Ausgestaltung sind im Planetenträger Planetenbolzen aufgenommen, an denen Planetenräder, insbesondere über auf die Planetenbolzen aufgesteckte Nadellager, drehbar gelagert sind, welche sowohl mit dem Hohlrad als auch mit dem Sonnenrad im Eingriff sind. Von Vorteil ist dabei, dass ein kostengünstiges Planetengetriebe herstellbar ist.

Bei einer vorteilhaften Ausgestaltung sind die Leiterplatte und/oder das Sendemodul in einem Kunststoffgehäuse angeordnet, welches in der Sacklochbohrung angeordnet und/oder eingesteckt ist. Von Vorteil ist dabei, dass eine einfache sichere Montage erreichbar ist.

Bei einer vorteilhaften Ausgestaltung ist der Planetenträger mittels eines ersten Lagers und eines zweiten Lagers drehbar gelagert,
wobei der Innenring des ersten Lagers auf die zweite Wange aufgesteckt ist,
wobei der Außenring des ersten Lagers im Gehäuseteil aufgenommen ist und gegen und gegen ein oder das Hohlrad oder gegen einen nach radial innen hervorragenden, das Hohlrad aufnehmenden Bund angestellt ist,
wobei der Innenring des zweiten Lagers auf die zweite Wange aufgesteckt und gegen eine Stufe der zweiten Wange angestellt ist,
wobei der Außenring des zweiten Lagers im Gehäuseteil aufgenommen ist und gegen ein oder das Hohlrad oder gegen einen nach radial innen hervorragenden, das Hohlrad aufnehmenden Bund angestellt ist,
wobei eine auf einen Gewindeberiech der zweiten Wange aufgeschraubte Wellenmutter auf den Innenring des ersten Lagers drückt. Von Vorteil ist dabei, dass der Planetenträger als abtreibendes Teil des Planetengetriebes verwendbar ist und erfindungsgemäß zum Überwachen der Funktion des Planetenträgers vorsehbar ist.

Bei einer vorteilhaften Ausgestaltung ist ein Wellendichtring im Gehäuseteil aufgenommen und dichtet zur ersten Wange hin ab. Von Vorteil ist dabei, dass die Antenne außerhalb des ölbefüllten Innenraums anordenbar ist und die Lager des Planetenträgers mit Öl beaufschlagt, insbesondere geschmiert, sind.

Bei einer vorteilhaften Ausgestaltung umfasst der von der Sacklochbohrung in axialer Richtung überdeckte Bereich den von den radial gerichteten Ausnehmungen, insbesondere Radialnuten, in axialer Richtung überdeckten Bereich. Von Vorteil ist dabei, dass die elektromagnetische Strahlung direkt radial austreten kann und somit die Antenne im von den Ausnehmungen überdeckten axialen Bereich anordenbar ist.

Bei einer vorteilhaften Ausgestaltung weist am Planetengetriebe, insbesondere am Gehäuseteil des Planetengetriebes, eine Auswerteeinheit angeordnet ist, die mit einer Antenne verbunden ist, welche an der Innenseite des Gehäuseteils angeordnet ist, insbesondere zum Empfang der vom Sendemodul abgestrahlten, durch die Ausnehmungen gelangenden elektromagnetischen Wellen. Von Vorteil ist dabei, dass die Sensorsignale zum Überwachen des Getriebes und somit des Antriebssystems verwendbar sind, wodurch sich die Betriebssicherheit erhöht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

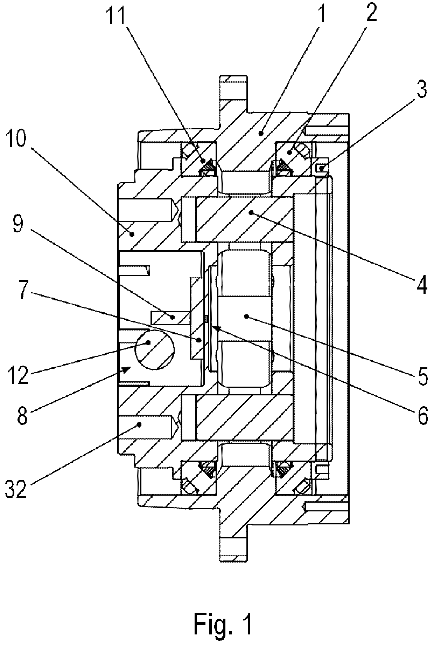

In der Figur 1 ist ein Querschnitt eines erfindungsgemäßen Planetengetriebes dargestellt.

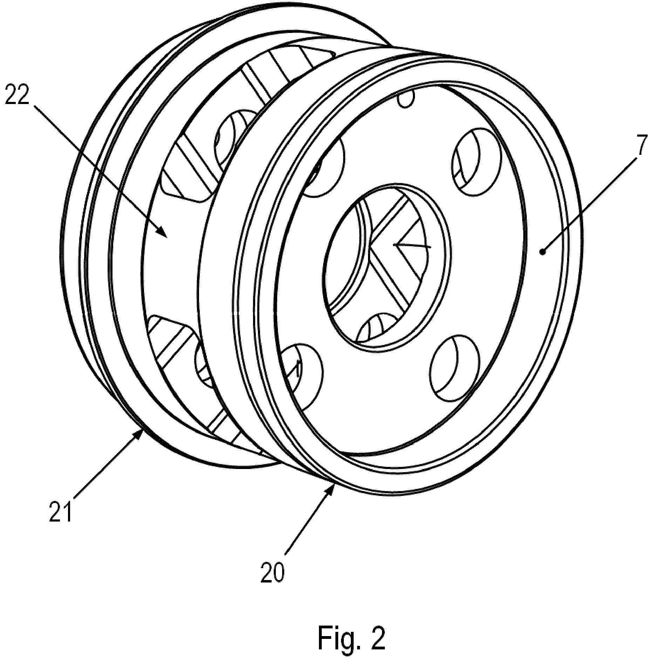

In der Figur 2 ist eine Schrägansicht eines Planetenträgers 10 des Planetengetriebes aus einer ersten Blickrichtung dargestellt.

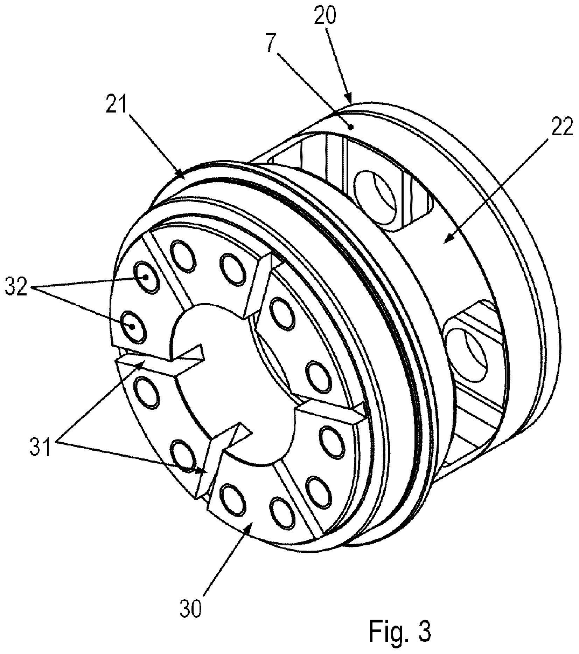

In der Figur 3 ist eine Schrägansicht des Planetenträgers 10 des Planetengetriebes aus einer zweiten Blickrichtung dargestellt.

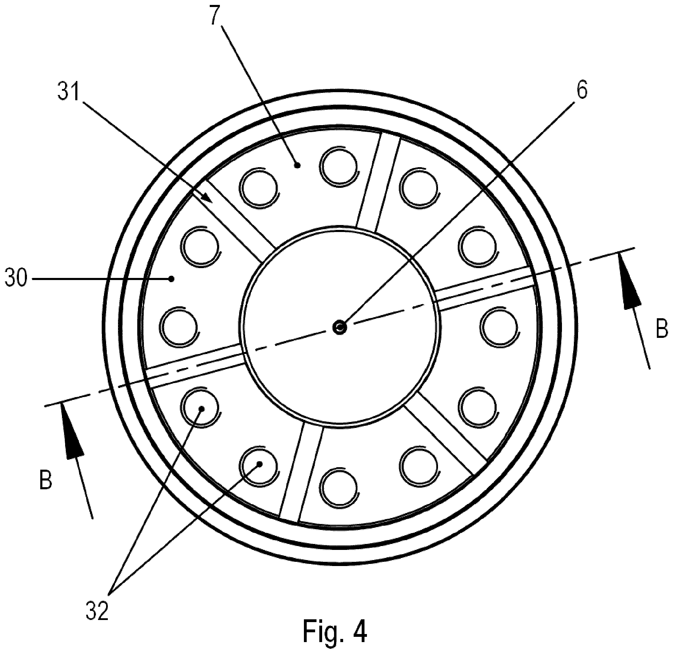

In der Figur 4 ist eine Draufsicht auf den Planetenträger 10 dargestellt.

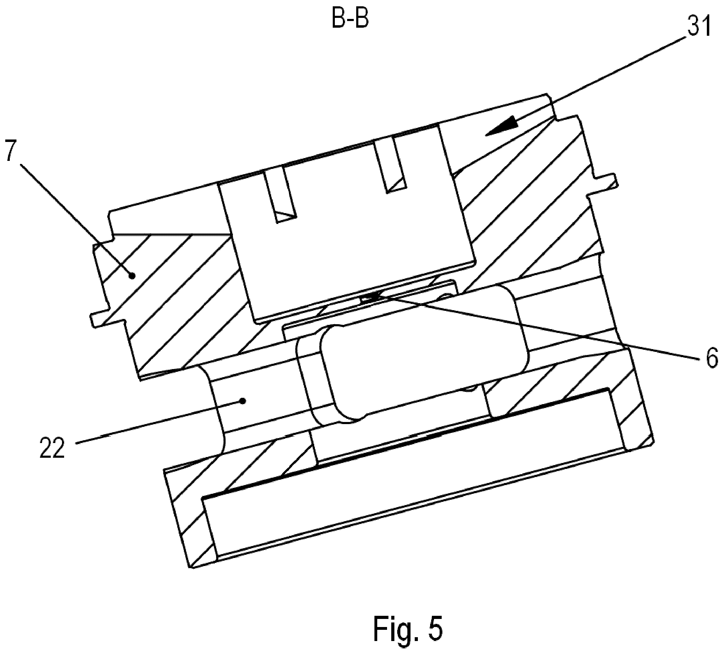

In der Figur 5 ist ein Querschnitt des Planetenträgers 10 dargestellt.

Wie in den Figuren dargestellt, ist ein Sonnenrad mit der eintreibenden Welle 5 drehfest verbunden und steht mit Planetenrädern im Eingriff, die auf Planetenbolzen 4 drehbar gelagert angeordnet sind und mit einem Hohlrad 1 im Eingriff sind, das als Gehäuseteil des Getriebes ausgeführt ist oder mit einem Gehäuseteil des Getriebes drehfest verbunden ist.

Die Planetenbolzen 4 sind in dem Planetenträger 10 aufgenommen, der als zweiwangiger Planetenträger ausgeführt ist.

Der Planetenträger 10 weist eine erste Wange 21 und eine zweite Wange 20 auf, die über in Umfangsrichtung voneinander beabstandete Stege 22 verbunden sind. Vorzugsweise ist der Planetenträger 10 einstückig, insbesondere einteilig, ausgeführt, insbesondere samt der ersten Wange 21, der zweiten Wange 20 und den Stegen 22.

Jeder der Planetenbolzen 4 ist sowohl durch eine Bohrung der zweiten Wange 20 durchgesteckt als auch in eine Bohrung, insbesondere Sackloch-artige Bohrung, der ersten Wange 21 eingesteckt.

Der Planetenträger 10 weist in seiner ersten Wange 21 eine mittig eingebrachte Sacklochbohrung 8 auf. Die Bohrachse der Sacklochbohrung 8 ist koaxial zur Drehachse des Planetenträgers 10 ausgerichtet.

Der Planetenträger 10 ist über ein erstes und ein zweites Lager (2, 11) im Gehäuseteil des Getriebes gelagert.

Dabei ist der Innenring des ersten Lagers 2 auf die zweite Wange 20 aufgesteckt und von einer auf einen Gewindebereich der zweiten Wange 20 aufgeschraubten Wellenmutter 3 axial begrenzt.

Der Außenring des ersten Lagers 2 ist im Gehäuseteil aufgenommen und gegen das Hohlrad 1 oder einen nach radial innen hervorragenden, das Hohlrad 1 aufnehmenden Bund angestellt.

Ebenso ist der Außenring des zweiten Lagers 11, insbesondere auf der vom ersten Lager 2 axial abgewandten Seite des Hohlrads 1, gegen das Hohlrad 1 oder einen nach radial innen hervorragenden, das Hohlrad 1 aufnehmenden Bund angestellt.

Der Innenring des zweiten Lagers 11 ist auf die erste Wange 21 aufgesteckt und gegen eine an der ersten Wange 21 ausgebildeten Stufe angestellt.

Somit ist durch Anziehen der Wellenmutter 3 die Lagerspannung einstellbar. Allerdings werden die Spannkräfte auch über die Stege 22 geleitet.

Zur Überwachung und Bestimmung der Verformung des Planetenträgers 10 ist zumindest ein Sensor, insbesondere Dehnungsmessstreifen, an einem der Stege 22 angebracht.

Dabei weisen die Stege 22 jeweils eine, insbesondere außenzylindrisch, gekrümmte radial äußere Fläche auf, die als Sensorfläche, also als zum Anbringen des Sensors geeignete Fläche fungiert.

Alternativ oder zusätzlich sind aber auch ebene Flächenabschnitte der Stege 22 als Sensorfläche geeignet. Vorzugsweise weist jeder Steg 22 eine in Umfangsrichtung vorne und hinten eben ausgebildete Fläche auf, die jeweils nur eine einzige Umfangswinkelposition aufweist, also nur in radialer Richtung und in axialer Richtung sich erstreckt. Weiter vorzugswiese ist diese jeweilige ebene Fläche fein bearbeitet, so dass sie als Sensorfläche optimal geeignet ist.

Die erste Wange 21 weist mittig zur Sacklochbohrung 8 eine durchgehende Axialbohrung 6 auf, durch die eine elektrische Anschlussleitung vom Sensor in die Sacklochbohrung hindurchführt bis zu einer Leiterplatte 7, welche in der Sacklochbohrung 8 angeordnet ist, insbesondere am Boden der Sacklochbohrung.

Diese Leiterplatte 7 ist elektrisch verbunden, insbesondere steckverbunden, mit einem Sendemodul 9. Vorzugsweise ist dieses als Bluetooth-Sendeeinheit oder WLAN-Sendeeinheit ausgeführt.

Die erste Wange 21 ist stirnseitig als Flanschblock-Schnittstelle 30 ausgebildet, so dass ein vom Planetengetriebe anzutreibendes Maschinenteil, insbesondere Roboterteil, schraubverbindbar ist. Hierzu sind stirnseitig in der ersten Wange 21 axial gerichtete Bohrungen 32 eingebracht, die jeweils auf dem gleichen Radialabstand zur Drehachse des Planetenträgers 10 angeordnet sind und in Umfangsrichtung voneinander beabstandet sind, insbesondere gleichmäßig voneinander beabstandet sind.

Das anzutreibende Maschinenteil deckt also die Stirnseite der ersten Wange 21 ab und ist vorzugsweise aus Metall gefertigt.

Der Planetenträger 10 ist aus Metall gefertigt.

Die vom Sendemodul 9 abgestrahlte elektromagnetisch Strahlung gelangt aus der Sacklochbohrung 8 mittels stirnseitig in der ersten Wange 21 angeordnete radial gerichteten Ausnehmungen 31, die in Umfangsrichtung voneinander beabstandet sind, insbesondere gleichmäßig voneinander beabstandet sind. Die Ausnehmungen 31 sind vorzugsweise als Nuten mit konstantem Querschnitt ausführbar. Alternativ sind die Ausnehmungen 31 auch mit einem zum Radialabstand proportional anwachsenden Querschnitt ausführbar.

Das Sendemodul 9 und die auf der Leiterplatte 7 angeordnete Signalelektronik sind von einem Energiespeicher aus versorgbar, der in der Sacklochbohrung 8 angeordnet ist, insbesondere auf der Leiterplatte 7. Vorzugsweise wird als Energiespeicher eine Batterie verwendet.

Eine Auswerteinheit ist am Planetengetriebe oder außerhalb angeordnet und elektrisch mit einer Antenne verbunden, die im Innenraum des Getriebes angeordnet ist. Hierzu ist eine durchgehende Bohrung im Gehäuseteil vorgesehen, durch welche eine elektrische Anschlussleitung geführt ist, welche die Antenne mit der Auswerteeinheit verbindet.

Der von der Sacklochbohrung 8 in axialer Richtung überdeckte Bereich umfasst den von den radial gerichteten Ausnehmungen 31, insbesondere Radialnuten, in axialer Richtung überdeckten Bereich. Somit ist auch bei stirnseitigem Bedecken der Sacklochbohrung 8 durch ein anzutreibendes Teil ein Austreten der vom Sendemodul 9 abgestrahlten elektromagnetischen Strahlung ermöglicht.

Die Ausnehmungen 31 sind münden nach radial innen einerseits in die Sacklochbohrung und andererseits nach radial außen in den Innenraum des Getriebes.

In axialer Richtung sind die Ausnehmungen 31 auf der von den Lagern (2, 11) abgewandten Seite eines Wellendichtrings angeordnet, der im Gehäuseteil aufgenommen ist und zum Planetenträger 10 hin abdichtet.

Die Wangen (20, 21) sind auch als Wangenteile (20, 21) bezeichenbar.

In der Sacklochbohrung 8 ist zusätzlich ein Energiespeicher 12, insbesondere Batterie, angeordnet, aus welchem das Sendemodul 9 und die auf der Leiterplatte 7 bestückte Signalelektronik versorgbar ist.

Bei weiteren erfindungsgemäßen Ausführungsbeispielen wird über die Antenne ein elektromagnetischer Wellenzug abgestrahlt, der von dem Sendemodul 9 empfangen wird und aus der Energie des empfangenen Signals die Signalelektronik sowie das Sendemodul 9 elektrisch versorgt wird. Insbesondere ist somit der Energiespeicher als Doppelschichtkondensator ausführbar und aufladbar, so dass die vom Sendemodul 9 abgestrahlte Leistung sowie die Verbrauchsleistung des Sendemoduls 9 und der Signalelektronik verfügbar ist.

Bei weiteren erfindungsgemäßen Ausführungsbeispielen wird Signalelektronik aus einer Verlustenergiequelle versorgt. Beispielsweise ist hierzu ein Peltierelement oder ein nach dem Seebeck-Effekt arbeitendes Element am Planetenträger 10 angeordnet oder ein Piezoelement, so dass aus einem Wärmestrom und/oder aus Körperschall elektrische Energie gewinnbar ist.

Bei weiteren erfindungsgemäßen Ausführungsbeispielen ist die Signalelektronik berührungslos mit elektrischer Energie versorgt, indem eine Ringwicklung am äußeren Umfang der ersten Wange 21 angebracht ist, die koaxial zur Drehachse des Planetenträgers 10 ausgerichtet ist und induktiv gekoppelt ist mit einer stationär angeordneten zweiten Ringwicklung. Insbesondere ist diese zweite Ringwicklung an der Innenseite des Gehäuseteils des Getriebes befestigt oder am Hohlrad 1. Vorzugsweise ist die zweite Ringwicklung koaxial zur ersten Ringwicklung ausgerichtet.

Bei weiteren erfindungsgemäßen Ausführungsbeispielen wird statt der Dehnungsmessstreifen als Sensor ein anderer Sensortyp verwendet, wie beispielsweise ein OFW-Sensor, insbesondere also Oberflächenwellen-Sensor. Hierbei ist es vorteilhaft, die Sensorfläche eben zu gestalten. Der OFW-Sensor arbeitet vorzugsweise mit Radarfrequenzen, wobei ein Piezobereich auf einem Halbleiterplättchen aufgebracht ist, der eine akustische Oberflächenwelle anregt, die von auf dem Plättchen angeordneten Reflektoren zurück zum Piezobereich reflektiert wird und dabei wieder in eine Radarfrequenz verwandelt wird. Somit ist durch Auswerten des auf ein Anfragesignal folgenden Antwortsignals Verspannung der Sensorfläche und Temperatur der Sensorfläche bestimmbar.

Bei weiteren erfindungsgemäßen Ausführungsbeispielen sind die radial durchgehenden Ausnehmungen 31 nicht als Nuten, sondern als Bohrungen, insbesondere Radialbohrungen in der ersten Wange 21 ausgeführt. Somit sind die Ausnehmungen 31 einfach, kostengünstig und nicht für das anzutreibende Teil störend ausführbar.

### Bezugszeichenliste

1 Hohlrad
2 erstes Lager
3 Wellenmutter
4 Planetenbolzen
5 eintreibende Welle
6 durchgehende Axialbohrung
7 Leiterplatte
8 Sacklochbohrung, insbesondere axial gerichtet
9 Sendemodul
10 Planetenträger
11 zweites Lager
12 Energiespeicher, insbesondere Batterie
20 zweite Wange
21 erste Wange
22 Steg
30 Flanschblock-Schnittstelle
31 radial gerichtete Ausnehmungen
32 Bohrungen

## Patentansprüche

1. Antriebssystem mit Planetengetriebe,
wobei das Planetengetriebe einen zweiwangigen Planetenträger (10) aufweist,
wobei der Planetenträger eine erste Wange (21), eine zweite Wange (20) und Stege (22) aufweist,
wobei die Stege die erste Wange mit der zweiten Wange verbinden,
wobei am Planetenträger ein Sensor zur Erfassung von Werten einer physikalischen Größe befestigt ist,
wobei die erste Wange, eine Sacklochbohrung (8) aufweist,
wobei, die erste Wange (21) radial sich erstreckende Ausnehmungen (31) aufweist, **dadurch gekennzeichnet, dass** die Ausnehmungen (31) radial durchgehend durch die erste Wange ausgeführt sind und/ welche in die Sacklochbohrung (8) münden und sich bis zur radial äußeren Oberfläche der ersten Wange (21) erstrecken.

2. Antriebssystem nach Anspruch 1,
**dadurch gekennzeichnet, dass**
der Planetenträger einstückig, aus der ersten Wange, der zweiten Wange und den Stegen gebildet ist,

3. Antriebssystem nach einem der vorangegangenen Ansprüche,
**dadurch gekennzeichnet, dass**
die Bohrungsachse der Sacklochbohrung parallel zur axialen Richtung, ausgerichtet ist

4. Antriebssystem nach einem der vorangegangenen Ansprüche,
**dadurch gekennzeichnet, dass**
der Planetenträger eine durch die erste Wange durchgehende Axialbohrung aufweist, die koaxial zur Sacklochbohrung ausgerichtet ist,
wobei der lichte Innendurchmesser der Axialbohrung kleiner ist, als der lichte Innendurchmesser der Sacklochbohrung.

5. Antriebssystem nach einem der vorangegangenen Ansprüche,
**dadurch gekennzeichnet, dass**
der Sensor an einem der Stege befestigt ist.

6. Antriebssystem nach einem der vorangegangenen Ansprüche,
**dadurch gekennzeichnet, dass**
in der Sacklochbohrung, eine Leiterplatte angeordnet ist,
wobei eine elektrische Leitung von der Leiterplatte (7) durch die Axialbohrung zum Sensor geführt ist.

7. Antriebssystem nach einem der vorangegangenen Ansprüche,
**dadurch gekennzeichnet, dass**
in der Sacklochbohrung ein Sendemodul (9) angeordnet ist, das derart geeignet ausgeführt ist
dass das Sendemodul elektromagnetische Wellen, aussendet und/oder dass das Sendemodul die vom Sensor erfassten Werte mittels elektromagnetischer Wellen, aussendet.

8. Antriebssystem nach einem der vorangegangenen Ansprüche,
**dadurch gekennzeichnet, dass**
die Ausnehmungen als Nuten, ausgeführt sind, und/oder dass
die Ausnehmungen als Radialbohrungen ausgeführt sind,

9. Antriebssystem nach einem der vorangegangenen Ansprüche,
**dadurch gekennzeichnet, dass**
der Querschnitt der Ausnehmungen mit zunehmendem Radialabstand zur Drehachse des Planetenträgers proportional zu diesem Radialabstand zunimmt.

10. Antriebssystem nach einem der vorangegangenen Ansprüche,
**dadurch gekennzeichnet, dass**
an der Innenseite des Gehäuseteils oder des Hohlrads des Planetengetriebes eine Antenne angeordnet ist,

11. Antriebssystem nach einem der vorangegangenen Ansprüche,
**dadurch gekennzeichnet, dass**
im Planetenträger Planetenbolzen (4) aufgenommen sind, an denen Planetenräder, drehbar gelagert sind, welche sowohl mit dem Hohlrad (1) als auch mit dem Sonnenrad im Eingriff sind.

12. Antriebssystem nach einem der vorangegangenen Ansprüche,
**dadurch gekennzeichnet, dass**
die Leiterplatte und/oder das Sendemodul in einem Kunststoffgehäuse angeordnet sind, welches in der Sacklochbohrung angeordnet und/oder eingesteckt ist.

13. Antriebssystem nach einem der vorangegangenen Ansprüche,
**dadurch gekennzeichnet, dass**
der Planetenträger mittels eines ersten Lagers (2) und eines zweiten Lagers (11) drehbar gelagert ist,
wobei der Innenring des ersten Lagers (2) auf die zweite Wange aufgesteckt ist,
wobei der Außenring des ersten Lagers (2) im Gehäuseteil aufgenommen ist und gegen und gegen ein oder das Hohlrad oder gegen einen nach radial innen hervorragenden, das Hohlrad aufnehmenden Bund angestellt ist,
wobei der Innenring des zweiten Lagers (11) auf die zweite Wange aufgesteckt und gegen eine Stufe der zweiten Wange angestellt ist,
wobei der Außenring des zweiten Lagers (11) im Gehäuseteil aufgenommen ist und gegen ein oder das Hohlrad oder gegen einen nach radial innen hervorragenden, das Hohlrad aufnehmenden Bund angestellt ist,
wobei eine auf einen Gewindeberiech der zweiten Wange aufgeschraubte Wellenmutter (3) auf den Innenring des ersten Lagers (2) drückt.

14. Antriebssystem nach einem der vorangegangenen Ansprüche,
**dadurch gekennzeichnet, dass**
ein Wellendichtring im Gehäuseteil aufgenommen ist und zur ersten Wange hin abdichtet, und/oder dass
der von der Sacklochbohrung in axialer Richtung überdeckte Bereich den von den radial gerichteten Ausnehmungen, in axialer Richtung überdeckten Bereich umfasst.

15. Antriebssystem nach einem der vorangegangenen Ansprüche,
**dadurch gekennzeichnet, dass**
am Planetengetriebe, eine Auswerteeinheit angeordnet ist, die mit einer Antenne verbunden ist, welche an der Innenseite des Gehäuseteils angeordnet ist,

## Claims

1. A drive system with a planetary gear unit,
wherein the planetary gear unit has a pinion cage (10) with two side pieces,
wherein the pinion cage has a first side piece (21), a second side piece (20) and lands (22),
wherein the lands connect the first side piece to the second side piece,
wherein a sensor for acquiring values of a physical variable is fastened to the pinion cage,
wherein the first side piece has a blind bore (8),
wherein the first side piece (21) has radially extending cutouts (31),
**characterised in that** the cutouts (31) are embodied radially uninterrupted through the first side piece and which open into the blind bore (8) and extend up to the radially outer surface of the first side piece (21).

2. A drive system according to claim 1,
**characterised in that**
the pinion cage is formed in one piece from the first side piece, the second side piece and the lands.

3. A drive system according to one of the preceding claims,
**characterised in that**
the bore axis of the blind bore is oriented parallel to the axial direction.

4. A drive system according to one of the preceding claims,
**characterised in that**
the pinion cage has an axial bore which passes through the first side piece and which is oriented coaxially with the blind bore,
the clear internal diameter of the axial bore being smaller than the clear internal diameter of the blind bore.

5. A drive system according to one of the preceding claims,
**characterised in that**
the sensor is fastened to one of the lands.

6. A drive system according to one of the preceding claims,
**characterised in that**
a printed circuit board is arranged in the blind bore,
with an electric line being guided from the printed circuit board (7) through the axial bore to the sensor.

7. A drive system according to one of the preceding claims,
**characterised in that**
an emitter module (9) is arranged in the blind bore, which emitter module is embodied suitably such that the emitter module emits electromagnetic waves and that the emitter module emits the values acquired by the sensor by means of electromagnetic waves.

8. A drive system according to one of the preceding claims,
**characterised in that**
the cutouts are embodied as grooves,
and/or **in that**
the cutouts are embodied as radial bores.

9. A drive system according to one of the preceding claims,
**characterised in that**
the cross-section of the cutouts, with increasing radial distance from the axis of rotation of the pinion cage, increases proportionally to this radial distance.

10. A drive system according to one of the preceding claims,
**characterised in that**
an antenna is arranged on the inner side of the housing part or ring gear of the planetary gear unit.

11. A drive system according to one of the preceding claims,
**characterised in that**
planet pins (4) are received in the pinion cage, on which planet pins there are rotatably mounted planet wheels which mesh both with the ring gear (1) and with the sun wheel.

12. A drive system according to one of the preceding claims,
**characterised in that**
the printed circuit board and/or the emitter module is/are arranged in a plastics-material housing which is arranged and/or inserted in the blind bore.

13. A drive system according to one of the preceding claims,
**characterised in that**
the pinion cage is rotatably mounted by means of a first bearing (2) and a second bearing (11),
with the inner ring of the first bearing (2) being mounted on the second side piece,
with the outer ring of the first bearing (2) being received in the housing part and being adjusted against and against a or the ring gear or against a collar protruding radially inwards and receiving the ring gear,
with the inner ring of the second bearing (11) being mounted on the second side piece and being adjusted against a step of the second side piece,
with the outer ring of the second bearing (11) being received in the housing part and being adjusted against a or the ring gear or against a collar protruding radially inwards and receiving the ring gear,
with a shaft nut (3) screwed onto a threaded region of the second side piece pressing onto the inner ring of the first bearing (2).

14. A drive system according to one of the preceding claims,
**characterised in that**
a shaft sealing ring is received in the housing part and seals off towards the first side piece,
and/or **in that**
the region covered in the axial direction by the blind bore encompasses the region covered in the axial direction by the radially directed cutouts.

15. A drive system according to one of the preceding claims,
**characterised in that**
on the planetary gear unit there is arranged an evaluation unit which is connected to an antenna which is arranged on the inner side of the housing part.

## Revendications

1. Système d'entraînement avec engrenage planétaire,
l'engrenage planétaire présentant un porte-satellites à deux joues (10),
le porte-satellites présentant une première joue (21), une seconde joue (20) et des entretoises (22),
les entretoises reliant la première joue à la seconde joue,
un capteur permettant de détecter des valeurs d'une grandeur physique étant fixé au porte-satellites,
la première joue présentant un trou borgne (8),
la première joue (21) présentant des évidements (31) s'étendant radialement, **caractérisé en ce que** les évidements (31) sont réalisés radialement à travers la première joue et débouchent dans le trou borgne (8) et s'étendent jusqu'à la surface radialement extérieure de la première joue (21).

2. Système d'entraînement selon la revendication 1,
**caractérisé en ce que**
le porte-satellites est formé d'une seule pièce qui comprend la première joue, la seconde joue et les entretoises.

3. Système d'entraînement selon l'une quelconque des revendications précédentes,
**caractérisé en ce que**
l'axe d'alésage du trou borgne est orienté parallèlement à la direction axiale.

4. Système d'entraînement selon l'une quelconque des revendications précédentes,
**caractérisé en ce que**
le porte-satellites présente un alésage axial traversant la première joue et orienté de manière coaxiale par rapport au trou borgne,
le diamètre intérieur libre de l'alésage axial étant plus petit, dix fois plus petit, que le diamètre intérieur libre du trou borgne.

5. Système d'entraînement selon l'une quelconque des revendications précédentes,
**caractérisé en ce que**
le capteur est fixé à une des entretoises.

6. Système d'entraînement selon l'une quelconque des revendications précédentes,
**caractérisé en ce que**
une carte de circuit imprimé est agencée dans le trou borgne,
une ligne électrique allant de la carte de circuit imprimé (7) au capteur en traversant l'alésage axial.

7. Système d'entraînement selon l'une quelconque des revendications précédentes,
**caractérisé en ce que**
un module d'émission (9) est agencé dans le trou borgne, lequel module est réalisé de manière appropriée pour que
le module d'émission émette des ondes électromagnétiques, et pour que
le module d'émission émette au moyen d'ondes électromagnétiques les valeurs détectées par le capteur.

8. Système d'entraînement selon l'une quelconque des revendications précédentes, **caractérisé en ce que**
les évidements sont réalisés sous forme de rainures,
et/ou **en ce que**
les évidements sont mis en oeuvre sous forme d'alésages radiaux.

9. Système d'entraînement selon l'une quelconque des revendications précédentes, **caractérisé en ce que**
la section transversale des évidements augmente avec l'augmentation de la distance radiale par rapport à l'axe de rotation du porte-satellites, proportionnellement à ladite augmentation de distance radiale.

10. Système d'entraînement selon l'une quelconque des revendications précédentes, **caractérisé en ce que**
une antenne est agencée à l'intérieur de la partie carter ou de la couronne dentée de l'engrenage planétaire.

11. Système d'entraînement selon l'une quelconque des revendications précédentes, **caractérisé en ce que**
des axes planétaires (4), au niveau desquels des pignons satellites sont montés rotatifs, sont accueillis dans le porte-satellites,
lesquels axes planétaires sont en prise à la fois avec la couronne dentée (1) et avec la roue solaire.

12. Système d'entraînement selon l'une quelconque des revendications précédentes, **caractérisé en ce que**
la carte de circuit imprimé et/ou le module d'émission est/sont agencé(s) dans un boîtier en plastique qui est agencé et/ou inséré dans le trou borgne.

13. Système d'entraînement selon l'une quelconque des revendications précédentes, **caractérisé en ce que**
le porte-satellites (8) est monté rotatif au moyen d'un premier palier (2) et d'un second palier (11),
la bague intérieure du premier palier (2) étant enfichée sur la seconde joue,
la bague extérieure du premier palier (2) étant accueillie dans la partie carter et étant appliquée contre une ou la couronne dentée ou contre une collerette faisant saillie radialement vers l'intérieur et accueillant la couronne dentée,
la bague intérieure du second palier (11) étant enfichée sur la seconde joue et étant appliquée contre un étagement de la seconde joue,
la bague extérieure du second palier (11) étant accueillie dans la partie carter et étant appliquée contre une ou la couronne dentée ou contre une collerette faisant saillie radialement vers l'intérieur et accueillant la couronne dentée,
un écrou d'arbre (3) vissé sur une région filetée de la seconde joue appuyant sur la bague intérieure du premier palier (2).

14. Système d'entraînement selon l'une quelconque des revendications précédentes, **caractérisé en ce que**
une bague d'étanchéité d'arbre est accueillie dans la partie carter et assure l'étanchéité par rapport à la première joue,
et/ou **en ce que**
la région recouverte par le trou borgne dans la direction axiale comprend la région recouverte dans la direction axiale par les évidements orientés radialement.

15. Système d'entraînement selon l'une quelconque des revendications précédentes,
**caractérisé en ce que**
une unité d'évaluation reliée à une antenne agencée à l'intérieur de la partie carter est agencée au niveau de l'engrenage planétaire.
